# EUROPEAN PATENT APPLICATION

(11) **EP 4 686 553 A1**
(43) Date of publication of application: **04.02.2026**
(21) Application number: 25180181.7
(22) Date of filing: 02.06.2025
(51) Int. Cl.: B29C 67/20, B29C 70/66, C08J 9/32

(54) **SYNTACTIC-FOAM PARTS AND ASSOCIATED METHODS OF MAKING THE SAME**

(30) Priority: 30.07.2024 US 202418789240
(71) Applicant: The Boeing Company, Arlington, VA 22202 (US)
(72) Inventor: WILENSKI, Mark, Arlington, 22202 (US); TAYLOR, Megan, Arlington, 22202 (US); GREGERSEN, Kimberly-Alice, Arlington, 22202 (US)
(74) Representative: Boult Wade Tennant LLP

(57) **Abstract**

Disclosed herein is a syntactic-foam part (148) and method (200) of making the same. The method includes loading (202) micro-sized low-density spheres (114) into a mold (102) having macro-permitted regions (115) and macro-restricted regions (117). The method also includes loading (204) macro-sized low-density spheres in the mold so that they are surrounded by micro-sized low-density spheres and each one is spaced apart from any other one of the macro-sized low-density spheres. All of the macro-sized low-density spheres are entirety within the macro-permitted regions of the mold. The method further includes introducing (206) a resin (144) into and filling the mold to embed the micro-sized low-density spheres and macro-sized low-density spheres and solidifying (208) the resin after it fills the mold.

## Description

### FIELD

This disclosure relates generally to buoyancy foams, and more particularly to syntactic buoyancy foams made of low-density spheres embedded in a resin.

### BACKGROUND

Buoyancy foams are incorporated into parts to promote buoyancy of the part within a higher density fluid. Some parts that incorporate buoyancy foams include, but are not limited to, submarines, watercraft, oil drilling rigs and components, marine platforms, and other marine-based systems. Typical buoyancy foams are compression resistant and, in some cases, water resistant, durable, and reliable. Making buoyancy foams that have these characteristics, using an efficient, a cost-effective, and a reliable manufacturing process, can be difficult.

### SUMMARY

The subject matter of the present application has been developed in response to the present state of the art, and in particular, in response to the shortcomings of conventional buoyancy foams and conventional methods of making such buoyancy foams, that have not yet been fully solved by currently available techniques. Accordingly, the subject matter of the present application has been developed to provide syntactic-foam parts and corresponding methods of making such parts that overcome at least some of the shortcomings of prior art techniques.

The following is a non-exhaustive list of examples, which may or may not be claimed, of the subject matter, disclosed herein.

Disclosed herein is a method of making a syntactic-foam part. The method includes loading micro-sized low-density spheres into a mold, where the mold includes macro-permitted regions and macro-restricted regions. The method also includes loading macro-sized low-density spheres into the mold such that the macro-sized low-density spheres are surrounded by the micro-sized low-density spheres, each one of the macro-sized low-density spheres is spaced apart from any other one of the macro-sized low-density spheres, some of the micro-sized low-density spheres are between adjacent ones of the macro-sized low-density spheres, and each one of the macro-sized low-density spheres is entirely within one of the macro-permitted regions of the mold. A diameter of the macro-sized low-density spheres is at least ten times larger than a diameter of the micro-sized low-density spheres. The method further includes introducing a resin into the mold to fill the mold and embed the micro-sized low-density spheres and the macro-sized low-density spheres within the resin. The method further includes solidifying the resin after the resin fills the mold. The preceding subject matter of this paragraph characterizes example 1 of the present disclosure.

When the resin embeds the micro-sized low-density spheres, a parent foam may be formed that surrounds the macro-sized low-density spheres. An entirety of the macro-restricted regions may be filled with the parent foam. The preceding subject matter of this paragraph characterizes example 2 of the present disclosure, wherein example 2 also includes the subject matter according to example 1, above.

Prior to loading the macro-sized low-density spheres into the mold, the method may comprise coating each one of the macro-sized low-density spheres with a coating material to form a coating layer surrounding an entirety of each one of the macro-sized low-density spheres. The coating layer may have a coating thickness and the coating layer at least partially prevents each one of the macro-sized low-density spheres from entering the macro-restricted regions of the mold. The preceding subject matter of this paragraph characterizes example 3 of the present disclosure, wherein example 3 also includes the subject matter according to any of examples 1-2, above.

Each one of the macro-sized low-density spheres may be spaced apart from any other one of the macro-sized low-density spheres by at least a minimum distance. The minimum distance may be twice the coating thickness of the coating layer. The preceding subject matter of this paragraph characterizes example 4 of the present disclosure, wherein example 4 also includes the subject matter according to example 3, above.

The coating material of the coating layer may be a syntactic foam including micro-sized low-density spheres and a coating resin. The preceding subject matter of this paragraph characterizes example 5 of the present disclosure, wherein example 5 also includes the subject matter according to example 3, above.

Prior to loading the macro-sized low-density spheres into the mold, the method may include adding a plurality of spacing device to each one of the macro-sized low-density spheres at various locations about a circumference a corresponding one of macro-sized low-density spheres. Each one of the plurality of spacing devices has a spacing length. The spacing device may at least partially prevent each one of the macro-sized low-density spheres from entering the macro-restricted regions of the mold. The preceding subject matter of this paragraph characterizes example 6 of the present disclosure, wherein example 6 also includes the subject matter according to any of examples 1-5, above.

Prior to loading the macro-sized low-density spheres and the micro-sized low-density spheres in the mold, the method may include coating at least one interior wall of the mold with a boundary layer made of a boundary material. The boundary layer may have a boundary thickness that defines at least some of the macro-restricted regions of the mold. The boundary layer may at least partially prevent each one of the macro-sized low-density spheres from entering at least some of the macro-restricted regions of the mold. The preceding subject matter of this paragraph characterizes example 7 of the present disclosure, wherein example 7 also includes the subject matter according to any of examples 1-6, above.

The macro-sized low-density spheres may be positioned in predetermined locations within the macro-permitted regions of the mold using a positioning tool. The preceding subject matter of this paragraph characterizes example 8 of the present disclosure, wherein example 8 also includes the subject matter according to any of examples 1-7, above.

The macro-sized low-density spheres may further include first macro-sized low-density spheres, having a first diameter, and second macro-sized low-density spheres, having a second diameter. The second diameter of the second macro-sized low-density spheres may be at least two times larger than the first diameter of the first macro-sized low-density spheres. The preceding subject matter of this paragraph characterizes example 9 of the present disclosure, wherein example 9 also includes the subject matter according to any of examples 1-8, above.

The macro-sized low-density spheres may be uniformly positioned within the mold such that spacing between adjacent ones of the macro-sized low-density spheres is the same. The preceding subject matter of this paragraph characterizes example 10 of the present disclosure, wherein example 10 also includes the subject matter according to any of examples 1-9, above.

The macro-sized low-density spheres may have a first density. After solidifying the resin, a parent foam may be formed by the resin embedding the micro-sized low-density spheres (114), the parent foam has a second density. The first density may be lower than the second density. The preceding subject matter of this paragraph characterizes example 11 of the present disclosure, wherein example 11 also includes the subject matter according to any of examples 1-10, above.

Further disclosed herein is a syntactic-foam part. The syntactic-foam part includes macro-permitted regions and macro-restricted regions adjacent to the macro-permitted regions. Macro-sized low-density spheres are arranged within micro-sized low-density spheres such that the macro-sized low-density spheres are surrounded by the micro-sized low-density spheres, each one of the macro-sized low-density spheres is spaced apart from any other one of the macro-sized low-density spheres, some of the micro-sized low-density spheres are between adjacent ones of the macro-sized low-density spheres, and each one of the macro-sized low-density spheres is entirely within one of the macro-permitted regions. A diameter of the macro-sized low-density spheres is at least ten times larger than a diameter of the micro-sized low-density spheres. The syntactic-foam part also includes a resin embedding the macro-sized low-density spheres and the micro-sized low-density spheres. The preceding subject matter of this paragraph characterizes example 12 of the present disclosure.

A parent foam may be formed by the resin embedding the micro-sized low-density spheres and an entirety of the macro-restricted regions are filled with the foam matrix. The preceding subject matter of this paragraph characterizes example 17 of the present disclosure, wherein example 13 also includes the subject matter according to example 12, above.

Each one of the macro-sized low-density spheres may be coated with a coating material to form a coating layer surrounding an entirety of each one of the macro-sized low-density spheres. The coating layer may have a coating thickness and the coating layer at least partially prevents each one of the macro-sized low-density spheres from entering the macro-restricted regions. Each one of the macro-sized low-density spheres may be spaced apart from any other one of the macro-sized low-density spheres by a minimum distance of at least twice the coating thickness of the coating layer. The preceding subject matter of this paragraph characterizes example 14 of the present disclosure, wherein example 14 also includes the subject matter according to any of examples 12-13, above.

The resin embedding the macro-sized low-density spheres and the micro-sized low-density spheres may define an intermediate part having sidewalls. A boundary layer may be coupled to sidewalls of the intermediate part. The boundary layer may be made of a boundary material and has a boundary thickness that defines at least some of the macro-restricted regions of the mold. The boundary layer may at least partially prevent each one of the macro-sized low-density spheres from entering the macro-restricted regions of the mold. The preceding subject matter of this paragraph characterizes example 15 of the present disclosure, wherein example 15 also includes the subject matter according to any of examples 12-14, above.

The diameter of the micro-sized low-density spheres may be less than one hundred microns. The preceding subject matter of this paragraph characterizes example 16 of the present disclosure, wherein example 16 also includes the subject matter according to any of examples 12-15, above.

The diameter of the macro-sized low-density spheres may be equal to or greater than 0.5 inches (1.3 cm). The preceding subject matter of this paragraph characterizes example 17 of the present disclosure, wherein example 17 also includes the subject matter according to any of examples 12-16, above.

Additionally disclosed herein is a method of making a syntactic-foam part. The method includes loading micro-sized low-density spheres into a first mold. The method also includes loading macro-sized low-density spheres in the first mold such that the macro-sized low-density spheres are surrounded by the micro-sized low-density spheres, each one of the macro-sized low-density spheres is spaced apart from any other one of the macro-sized low-density spheres, some of the micro-sized low-density spheres are between adjacent ones of the macro-sized low-density spheres, and each one of the macro-sized low-density spheres are entirely within macro-permitted regions of the first mold. A diameter of the macro-sized low-density spheres is at least ten times larger than a diameter of the micro-sized low-density spheres. The method further includes introducing a resin into the first mold to fill the first mold and embed the micro-sized low-density spheres and the macro-sized low-density spheres within the resin and solidifying the resin after the resin fills the first mold to form an intermediate part. The method also includes removing the intermediate part from the first mold and loading the intermediate part into a second mold having a larger volume than the first mold, such that the intermediate part is spaced apart from at least one interior wall of the second mold and a perimeter region is defined between the at least one interior wall of the second mold and the intermediate part. The perimeter region defines at least a portion of the macro-restricted regions of the second mold. The method further includes introducing a boundary material into the perimeter region of the second mold so that the boundary material fills the perimeter region and solidifying the boundary material after the boundary material fills the perimeter region to form a boundary layer coupled to sidewalls of the intermediate part. The preceding subject matter of this paragraph characterizes example 18 of the present disclosure.

The boundary material may be at least partially formed of a parent foam including micro-sized low-density spheres and a resin. The preceding subject matter of this paragraph characterizes example 19 of the present disclosure, wherein example 19 also includes the subject matter according to example 18, above.

Prior to loading the macro-sized low-density spheres into the first mold, the method may include coating each one of the macro-sized low-density spheres with a coating material to form a coating layer surrounding an entirety of each one of the macro-sized low-density spheres. The coating layer may have a coating thickness. Each one of the macro-sized low-density spheres is spaced apart from any other one of the macro-sized low-density spheres by at least a minimum distance. The minimum distance may be twice the coating thickness of the coating layer. The preceding subject matter of this paragraph characterizes example 20 of the present disclosure, wherein example 20 also includes the subject matter according to any of examples 18-19, above.

The described features, structures, advantages, and/or characteristics of the subject matter of the present disclosure may be combined in any suitable manner in one or more examples. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example. In other instances, additional features and advantages may be recognized in certain examples that may not be present in all examples. Further, in some instances, well-known structures, materials, or operations are not shown or described in detail to avoid obscuring features of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings, which are not necessarily drawn to scale, depict only certain examples of the subject matter and are not therefore to be considered to be limiting of its scope, the subject matter will be described and explained with additional specificity and detail through the use of the drawings, in which:
Figure 1 is a schematic front elevation view of macro-sized low-density spheres and micro-sized low-density spheres being loaded into a mold;
Figure 2A is a schematic cross-sectional view of a hollow macro-sized low-density sphere and a hollow micro-sized low-density sphere;
Figure 2B is a schematic cross-sectional view of a non-hollow macro-sized low-density sphere and a non-hollow micro-sized low-density sphere;
Figure 3 is a schematic front elevation view of a plurality of first macro-sized low-density sphere, a second macro-sized low-density sphere, and micro-sized low-density spheres within a mold;
Figure 4 is a schematic partial front elevation view of macro-sized low-density spheres, with a coating layer, within a mold;
Figure 5A is a schematic front elevation view of micro-sized low-density spheres and macro-sized low-density spheres, with a coating layer, within a mold;
Figure 5B is a schematic front elevation view of micro-sized low-density spheres and macro-sized low-density spheres, with a coating later, within a mold having a boundary layer;
Figure 6 is a schematic front elevation view of a resin being introduced into and filling the mold of Figure 5A;
Figure 7 is a schematic front elevation view of a syntactic-foam part formed in the mold of Figure 5A;
Figure 8 is a schematic flow diagram of a method of making a syntactic-foam part;
Figure 9 is a schematic flow chart of a method of making a syntactic-foam part; and
Figure 10 is a schematic flow chart of another method of making a syntactic-foam part.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

Some conventional methods for making syntactic foams involve organizing micro-sized low-density spheres with a single size distribution into a mold and infusing the spheres with a resin, which embeds the spheres to form the part. For such spheres, the packing efficiency (i.e., volume fraction) of the mold is typically limited to less than 74 percent. Introducing additional micro-sized low-density spheres with a different size distribution can enhance packing efficiency. However, as the packing density increases by adding smaller spheres, it becomes more challenging to infuse the spheres with resin. This difficulty in infusion can result in longer infusion durations required to form the part or, in some cases, prevent the resin from fully infusing throughout the part. Consequently, this can limit the size and complexity of the parts that can be fabricated.

Described herein are examples of a method of making syntactic-foam parts that incorporate both micro-sized low-density spheres and macro-sized low-density spheres embedded in a resin. This method increases the packing efficiency of the foam while maintaining desirable levels of resin permeability. Additionally, the inclusion of macro-sized low-density spheres reduce the overall density of the syntactic-foam part, thereby improving its buoyancy performance. By integrating macro-sized low-density spheres within the micro-sized low-density spheres, the method effectively reduces part density and enhances packing efficiency without the negative impact of overly packed micro-sized low-density spheres. The macro-sized low-density spheres are strategically placed within the syntactic-foam part to minimize local stress concentrations at points where the macro-sized low-density spheres are in closest contact. These stress concentrations can cause failure of to the individual macro-sized low-density spheres or parent foam (i.e., micro-sized low-density spheres embedded in resin) between the spheres, which would be detrimental to the part's performance. Additionally, the macro-sized low-density spheres are positioned to ensure they are not machined through during subsequent processing.

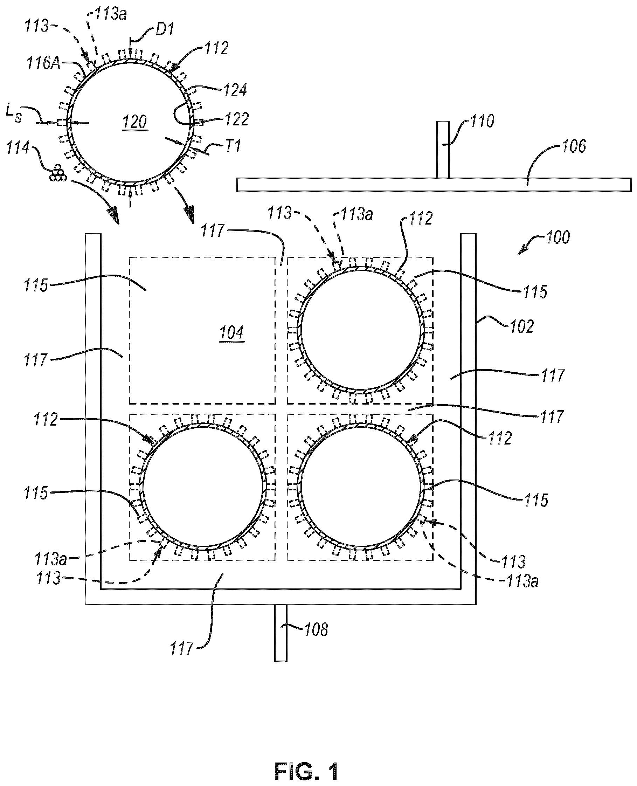

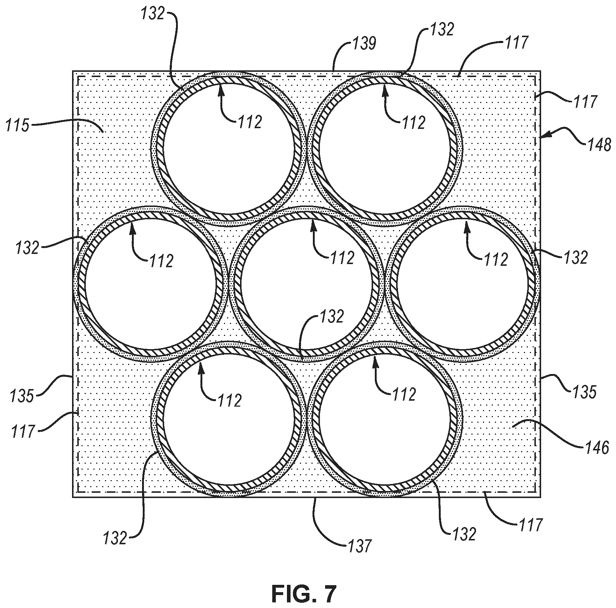

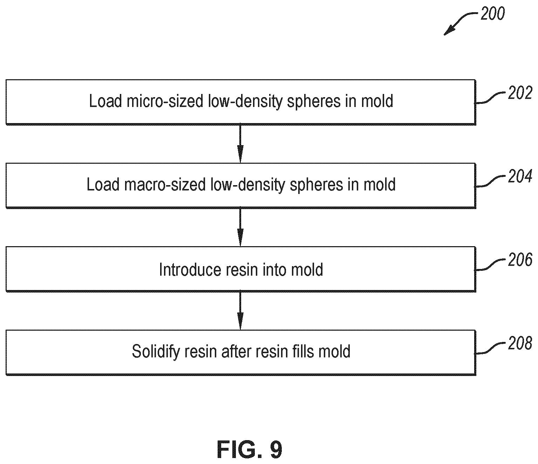

According to some examples, a method 200 of making a syntactic-foam part, such as the syntactic-foam part 148 of Figure 7, is shown in Figure 9. Referring generally to Figure 9 and specifically to Figure 1, the method 200 includes (block 202) loading micro-sized low-density spheres 114 in a mold 102. The method 200 also includes (block 204) loading macro-sized low-density spheres 112 in macro-permitted regions 115 of the mold 102. That is, the mold 102 includes macro-permitted regions 115, where macro-sized low-density spheres 112 are allowed to be positioned within the mold 102, and macro-restricted regions 117, where macro-sized low-density spheres 112 are not allowed to be positioned within the mold 102. The macro-permitted regions 115 within the mold 102 are strategically located to ensure the integrity of the resulting syntactic-foam part, avoiding areas that may be subjected to high stresses or machined in later processing. In contrast, macro-restricted regions 117 are designated areas where high stresses or machining may occur, and in some cases, may include buffer zones that extend beyond these areas. In other words, macro-restricted regions 117 include areas where the removal or damage to the syntactic foam could compromise the strength and functionality of the syntactic-foam part 148 if macro-sized low-density spheres 112 were present in those regions. Accordingly, the macro-restricted regions 117 ensures that the structural design of the syntactic-foam part 148 accounts for necessary spacing and buffer zones to maintain the integrity of the part under expected operational conditions.

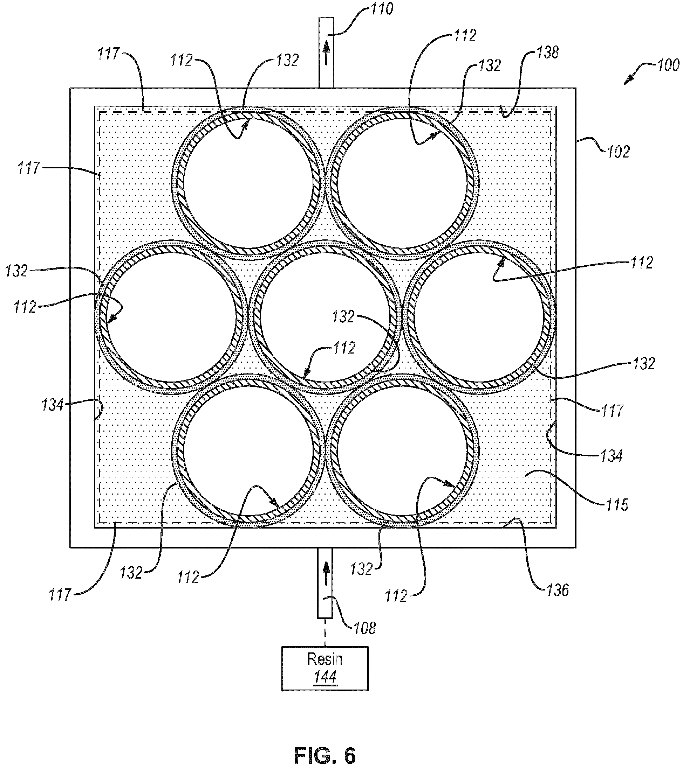

In some examples, macro-restricted regions 117 may include edges of the syntactic-foam part 148. Additionally, or alternatively, in some example, macro-restricted regions 117 may include regions designated for later machining to prevent compromising the foam structure and the integrity of the macro-sized low-density spheres 112 during subsequent processing. Furthermore, in yet some other examples, macro-restricted regions 117 may include spaces between adjacent macro-sized low-density spheres 112. Moreover, in some examples, an entirety of the macro-restricted regions 117 may be filled micro-sized low-density spheres 114, which are later embedded with resin to form a parent foam. As used herein, the parent foam refers to a specific type of syntactic foam that is formed from the micro-sized low-density spheres 114 and the resin 144 (see, e.g., Figure 6). In some other examples, at least some portions of the macro-restricted regions 117 may include materials other than the micro-sized low-density spheres 114, such that some portions are devoid of micro-sized low-density spheres 114. For example, portions of the macro-restricted regions 117 may contain resin only, a resin matrix composite material, or similar materials. Alternatively, in yet some other examples, the entirety of the macro-restricted regions 117 may be devoid of micro-sized low-density spheres 114.

In some examples, the mold 102 includes a selectively openable lid 106 that selectively covers an opening in the mold 102 through which the micro-sized low-density spheres 114 and the macro-sized low-density spheres 112 can be loaded into the mold 102. The macro-sized low-density spheres 112 are added to the mold 102 such that they are surrounded by the micro-sized low-density spheres 114. For simplicity, the micro-sized low-density spheres 114 are not shown within the mold 102, however, the micro-sized low-density spheres 114 would fill any area of the mold 102 where macro-sized low-density spheres 112 are not found. Specifically, each one of the macro-sized low-density spheres 112 are spaced apart from any other one of the macro-sized low-density spheres 112 such that some of the micro-sized low-density spheres 114 are between adjacent ones of the macro-sized low-density spheres 112. That is, the macro-sized low-density spheres 112 are not in direct contact with each other.

The spacing required between adjacent macro-sized low-density spheres 112 may depend on the inherent strength of the spheres themselves; inherently stronger spheres can be placed closer to one another than inherently weaker spheres. Proper placement of the macro-sized low-density spheres 112 is important to avoid stress concentrations within the resulting part. Since the spheres are macro-sized, and significantly larger than the micro-sized low-density spheres 114, their spacing relative to the mold 102 and to each other can be controlled. Accordingly, the minimum spacing between the macro-sized low-density spheres 112 is intentionally set, and may not be as far apart as is illustrated in the renderings. In addition to being spaced apart from each other, each one of the macro-sized low-density spheres 112 is entirely within one of the macro-permitted regions 115 of the mold 102. According to some examples using both macro-sized low-density spheres 112 and micro-sized low-density spheres 114, a packing efficiency for all or portions of the mold 102 is at least 76% packed, such as at least 84% packed in some examples and at least 95% packed in some other examples.

The mold 102 forms part of a molding tool 100, which further includes a resin introduction system. The resin introduction system is operable to introduce a resin into an interior cavity 104 of the mold 102. In some examples, the resin introduction system includes a resin inlet 108 and a resin outlet 110. The resin inlet 108 is operable to introduce a resin, from a resin source of the resin introduction system, into the interior cavity 104 (see, e.g., Figure 6). The resin outlet 110 is operable to release excess resin from the interior cavity 104. Each one of the resin inlet 108 and the resin outlet 110 can include a valve that is selectively operable to regulate the flow of the resin into and out of the interior cavity 104, respectively. In some examples, including the illustrated example, the resin inlet 108 is located at a bottom of the mold 102 and the resin outlet 110 is located at the top of the mold 102. In some other examples, the resin inlet 108 and the resin outlet 110 can be located in other respective locations on the mold 102.

The size and shape of the interior cavity 104 of the mold 102 defines the sizes and shape of the syntactic-foam part 148 (see, e.g. Figure 7). The syntactic-foam part 148, and thus the interior cavity 104 of the mold 102, can have any of various shapes and sizes, such as, but not limited to, standard shapes (e.g., rectangular prisms, cuboid, cube, pyramid, cone, dodecahedron, and/or like) or complex shapes. It is noted that the macro-sized low-density spheres 112, the micro-sized low-density spheres 114, and the mold 102 are not necessarily to scale. For example, in some examples, including the illustrated renderings, the size of the macro-sized low-density spheres 112 are abnormally large relative to the size of the mold 102 for better clarity in showing and describing the examples. In practice, the size of the macro-sized low-density spheres 112 and the micro-sized low-density spheres 114 will be much smaller relative to the size of the mold 102 than is depicted.

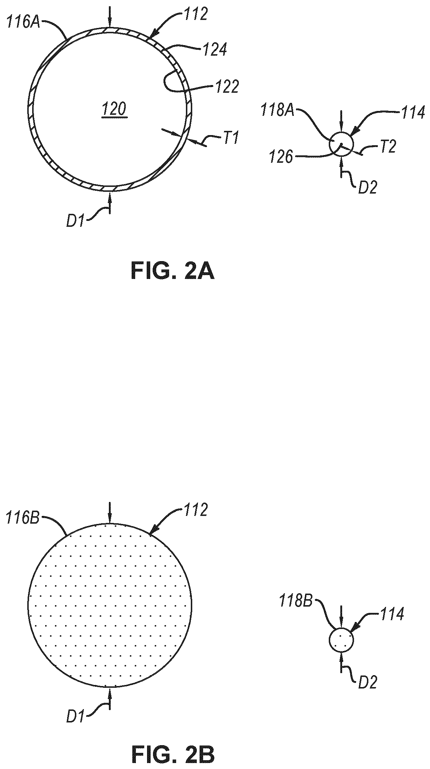

The macro-sized low-density spheres 112 have a first size distribution that is larger than a second size distribution of the micro-sized low-density spheres 114. The size distributions of both the macro-sized low-density spheres 112 and the micro-sized low-density spheres 114 accounts for the slight variations in size that may occur due to the manufacturing process of the spheres. As shown in Figures 2A and 2B, a diameter *D1* of the macro-sized low-density spheres 112 is at least ten times larger than a diameter *D2* of the micro-sized low-density spheres 114. In some examples, a maximum diameter *D1* of the macro-sized low-density spheres 112 is between, and inclusive of, 0.5 inches to 6 inches (1.3 cm to 15 cm), such as between, and inclusive of 1 inch and 6 inches (2.5 cm and 15 cm) in some examples, such as between, and inclusive of 1 inch and 3 inches (2.5 cm and 7.6 cm) in some other examples, and such as between, and inclusive of 3 inches to 6 inches (7.6 cm to 15 cm) in yet some other examples. Additionally, in some examples, the maximum diameter *D2* of the micro-sized low-density spheres 114 is between, and inclusive of, 20 microns and 5000 microns, such as between, and inclusive of, 30 microns and 500 microns in some examples, and such as between, and inclusive of, 30 microns and 250 microns in some other examples. For example, in certain cases, the maximum diameter D2 of the micro-sized low-density spheres 114 is equal to or less than 100 microns.

Additionally, the size and shape of the interior cavity 104 of the mold 102 defines a maximum diameter *D1* of the macro-sized low-density sphere 112. Specifically, the maximum diameter *D1* is determined relative to a smallest dimension of the interior cavity 104. For example, in certain cases, the maximum diameter *D1* of the macro-sized low-density sphere 112 may not exceed 75% of the smallest dimension of the interior cavity 104 in some examples, 50% in some other examples, and 30% in yet some other examples. Accordingly, as the size and shape of the interior cavity 104 of the mold 102 decrease, the maximum diameter *D1* of the macro-sized low-density spheres 112 proportionally decreases.

According to some examples, as shown in Figures 1, 2A, and 3-8, each one or at least one of the macro-sized low-density spheres 112 is a hollow sphere 116A. Referring to Figure 2A, the hollow sphere 116A has a hollow interior space 120 defined by an interior surface 122 of a sidewall that also defines an exterior surface 124 of the macro-sized low-density sphere 112. The hollow sphere 116A is a thin-walled construction. In other words, a thickness *T1* of the sidewall is smaller than a radius of the macro-sized low-density sphere 112. Additionally, in some examples, each one or at least one of the micro-sized low-density spheres 114 is a hollow sphere 118A. Similar to the hollow sphere 116A, the hollow sphere 118A has a hollow interior space 126 defined by an interior surface of a sidewall that also defines an exterior surface of the micro-sized low-density sphere 114. The hollow sphere 118A is a thin-walled construction having a thickness *T2*. The hollow sphere 116A and the hollow sphere 118A can be made of any of various materials, such as, but not limited to, glass (e.g., borosilicate glass, quartz, and soda lime glass), ceramic (e.g., silicon carbide, boron carbide, silicon nitride), polymer, and/or the like.

In some alternative examples, such as shown in Figure 2B, each one or at least one of the macro-sized low-density spheres 112 is a non-hollow foam sphere 116B. The foam sphere 116B does not have a single hollow space, such as with the hollow sphere 116A. Rather, the foam sphere 116B is made of a solid piece of foam, which has multiple hollow spaces in the form of multiple open or closed cells. In some examples, the foam of the foam sphere 116B is one or more of polystyrene foam, expanded polystyrene (EPS) foam, expanded polypropylene (EPP) foam, polyethylene foam, polyurethane foam, and/or any of various other types of foam. In some other examples, the foam of the foam sphere 116B is one or more of a syntactic foam, formed of micro-sized low-density spheres and a resin. In yet some other examples, the foam of the foam sphere 116B is one or more of a ceramic foam or a metal foam. Additionally, in some examples, each one or at least one of the micro-sized low-density spheres 114 is a non-hollow foam sphere 118B.

The macro-sized low-density spheres 112 have a first density. The micro-sized low-density spheres 114, when embedded in the resin to form the parent foam, have a second density. The first density of the macro-sized low-density spheres 112 is lower than the second density of the parent foam. Accordingly, the inclusion of macro-sized low-density spheres 112 within the mold 102 reduces the part density of the resulting syntactic-foam part, compared to a syntactic-foam part made entirely of the parent foam. As used herein, in some examples, a micro-sized low-density sphere 114 is a hollow or non-hollow sphere having a density of between, and inclusive of, 0.005 g/cm³ and 0.6 g/cm³, such as between, and inclusive of, 0.05 g/cm³ and 0.4 g/cm³ in some examples, and between, and inclusive of, 0.1 g/cm³ and 0.3 g/cm³ in some other examples, between and inclusive of, 0.02 g/cm³ and 0.15 g/cm³ in yet some other examples, and between, and inclusive of, 0.015 g/cm³ and 0.03 g/cm³ in a further example.

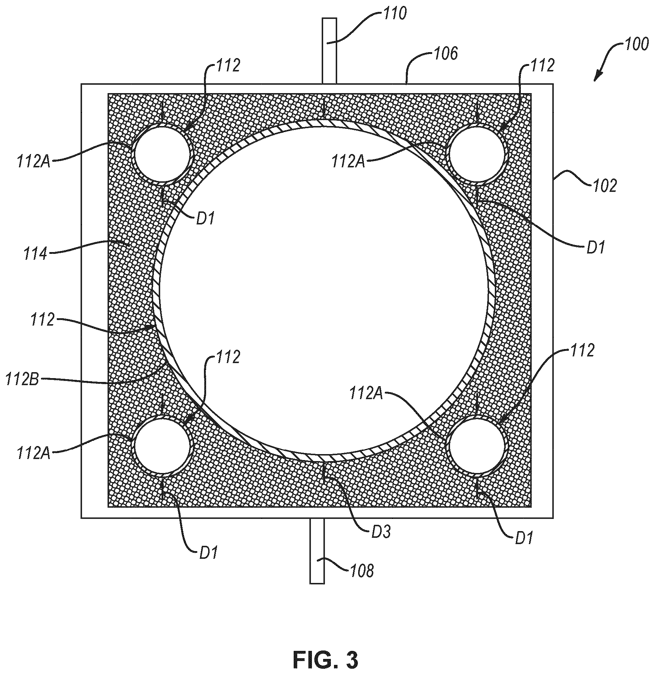

In some examples, such as shown in Figure 1, all the macro-sized low-density spheres 112 loaded into the mold 102 at block 204 have the same size distribution. However, in some other examples, such as shown in Figure 3, the macro-sized low-density spheres 112 loaded into the mold 102 at block 204 can have different size distributions. In Figure 3, for example, first macro-sized low-density spheres 112A, having a first diameter *D1,* are loaded into the mold 102 along with a second macro-sized low-density sphere 112B, having a second diameter *D3,* where the second macro-sized low-density sphere 112B is larger than the first macro-sized low-density spheres 112A. The mold 102 may include varying amounts of first macro-sized low-density spheres 112A and second macro-sized low-density spheres 112B depending on the size and shape of the mold 102.

The second macro-sized low-density spheres 112B can be considerably larger than the first macro-sized low-density spheres 112A. In some examples, the second macro-sized low-density spheres 112B are between, and inclusive of 2 and 25 times larger than the first macro-sized low-density spheres 112A, such as between, and inclusive of 3 and 15 times larger than the first macro-sized low-density spheres 112A in some examples, and between, and inclusive of 5 and 10 times larger than the first macro-sized low-density spheres 112A in some other examples. Moreover, in some examples, the second macro-sized low-density spheres 112B are at least two times larger than the first macro-sized low-density spheres 112A. In some examples, the second macro-sized low-density spheres 112B are at least seven times larger than the first macro-sized low-density spheres 112A, which may allow for the smaller spheres to settle into the spaces between the larger spheres, optimizing packing density. Optimizing the quantity of each, as well as spacing between spheres, may improve the packing efficiency and structural integrity of the final part. Optimization may consider the spatial distribution and arraignment of the spheres to maintain the desired mechanical properties and prevent stress concentrations within the mold 102. Accordingly, in some examples, the size of first macro-sized low-density spheres 112A and second macro-sized low-density spheres 112B are selected, in view of the size of the mold 102, so that the differently-sized macro-sized low-density spheres 112 can optimize space within macro-permitted regions 115. In some examples, the second macro-sized low-density spheres 112B are the same type of sphere (e.g., same material) as the first macro-sized low-density spheres 112A, but larger. However, in some alternative examples, the second macro-sized low-density spheres 112B are a different type of sphere than the first macro-sized low-density spheres 112A. Similarly, the micro-sized low-density spheres 114 surrounding the macro-sized low-density spheres 112 may have more than one size distribution as well.

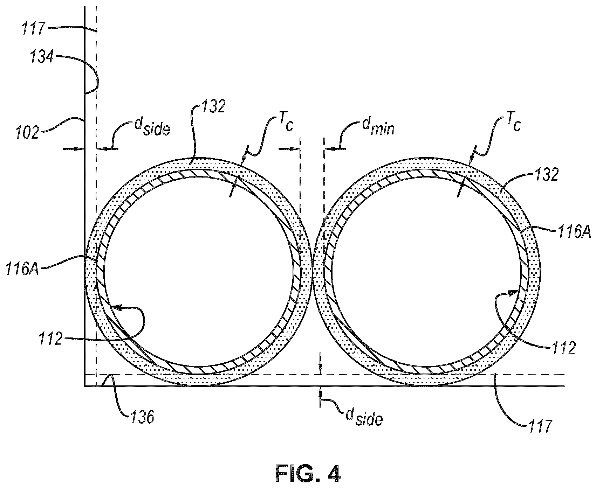

As shown in Figure 4, in some examples, the macro-sized low-density spheres 112 are pre-coated with a coating layer 132 before being loaded into the mold 102 at block 204. The coating layer 132 has a uniform or substantially uniform (i.e., non-variable) coating thickness *T_{c}* surrounding an entirety of the sphere. That is, the coating layer 132 is adhered to the exterior surface 124 of the macro-sized low-density spheres 112. The coating layer 132 can be made of any of various coating materials, such as, but not limited to, a resin matrix composite material, nano-scale materials, glass, water glass, colloidal silica nanoparticles, polymer, ceramic, and/or the like. In some examples, the coating layer 132 is a made of a syntactic foam, including micro-sized low-density spheres, such as the micro-sized low-density spheres 114 and a coating resin, which may be the same resin used to embed the spheres in the mold 102 or a different resin. For example, the syntactic foam may be pre-coated on the macro-sized low-density spheres 112 using a castable foam. Additionally, the coating material may be porous or solid. In some examples, the thickness *T_{c}* of the coating layer 132, relative to the diameter of the macro-sized low-density sphere 112, is between, and inclusive of 0.05 and 1 times the diameter, such as between, and inclusive of 0.1 and 0.75 times the diameter in some examples, and between, and inclusive of 0.2 and 0.5 times the diameter in some other examples.

The coating layer 132 may be used to space apart macro-sized low-density spheres 112 from any other one of the macro-sized low-density spheres 112. Accordingly, the coating layer 132 maintains a uniform separation between the macro-sized low-density spheres 112 and prevents direct contact between spheres. The uniform separation ensures that the macro-sized low-density spheres 112 are properly spaced to minimize local stress concentrations, which could otherwise lead to failures in the spheres or the surrounding matrix. Specifically, the coating layer 132 sets a minimum distance *dₘᵢₙ* between adjacent macro-sized low-density spheres 112, where the minimum distance *dₘᵢₙ* is twice the coating thickness T_{c} of the coating layer 132. In other words, the coating layer 132 on a first macro-sized low-density sphere combined with the coating layer 132 on a second macro-sized low-density sphere determines the minimum distance *dₘᵢₙ* between the two spheres. Additionally, in some cases, the coating layer 132 may be used to provide strength and/or add thermal conductivity to the underlying macro-sized low-density sphere 112.

The coating layer 132, in certain cases, may be used to at least partially prevent macro-sized low-density spheres 112 from entering macro-restricted regions 117 of the mold 102. For example, the coating layer 132 prevents the macro-sized low-density sphere 112 from coming within a distance *d_{side}* of an interior wall of the mold 102, such as a lateral surface 134 and a base surface 136 of the mold 102. As shown, the distance *d_{side}* is equal to a width of the macro-restricted regions 117 along the lateral surface 134 and the base surface 136, such that the coating layer 132 prevents the macro-sized low-density spheres 112 from entering the macro-restricted regions 117. In these cases, the macro-sized low-density spheres 112 can be placed within the mold 102 without additional consideration about spacing from the interior walls. In some other examples, where the width of the macro-restricted regions 117 is larger than the thickness of the coating layer *T_{c}* additional means may be used to prevent the macro-sized low-density spheres 112 from entering the macro-restricted regions 117, such as specific placement of the macro-sized low-density spheres 112 within the mold 102.

Although the coating layer 132 is shown in the illustrated examples as having a single layer, in some examples, the coating layer 132 can have multiple layers of coating material so that the thickness *T_{c}* of the coating layer 132 is the combined thicknesses of the individual layers of the coating layer 132. The coating material of the multiple layers of the coating layer 132 can be the same type of coating material or different types of coating material. For example, where the coating material of the coating layers 132 are different types of coating material, the first coating material applied onto the macro-sized low-density spheres 112 can be a coating material that seals the macro-sized low-density spheres 112 and the second layer, and subsequent layers, can be a coating material that is stronger than the coating material that seals the macro-sized low-density spheres 112. According to some other examples, where the coating material of the coating layers 132 are different types of coating materials, the first coating material applied onto the macro-sized low-density spheres 112 can be a solid or homogenous coating material and the second layer, and subsequent layers, can be a composite coating material that has small microspheres.

Additionally, or alternatively, to the coating layer 132, a spacing device 113 may be used to space apart macro-sized low-density spheres 112 from any other one of the macro-sized low-density spheres 112. A spacing device 113 is a component that is used to maintain a predetermined distance or gap between macro-sized spheres. As shown in Figure 1, each one of the spacing devices 113 having a spacing length *Lₛ*, such that the macro-sized low-density spheres 112 are spaced apart from other macro-sized low-density spheres 112 by at least the spacing length *Lₛ*. For example, as shown in Figure 1, each one of the macro-sized low-density spheres 112 may include spacing tabs 113A. The spacing tabs 113A, shown in dotted lines, are small protrusions located at various locations about the circumference of the macro-sized low-density spheres 112. The spacing tabs 113A ensure that the macro-sized low-density spheres 112 are prevented from contacting each other and the sidewalls of the mold. The spacing tabs 113A may be made of any of various materials, which are resilient enough to maintain their spacing function during the resin embedding process, such as a syntactic foam, plastic, rubber, metal, and the like.

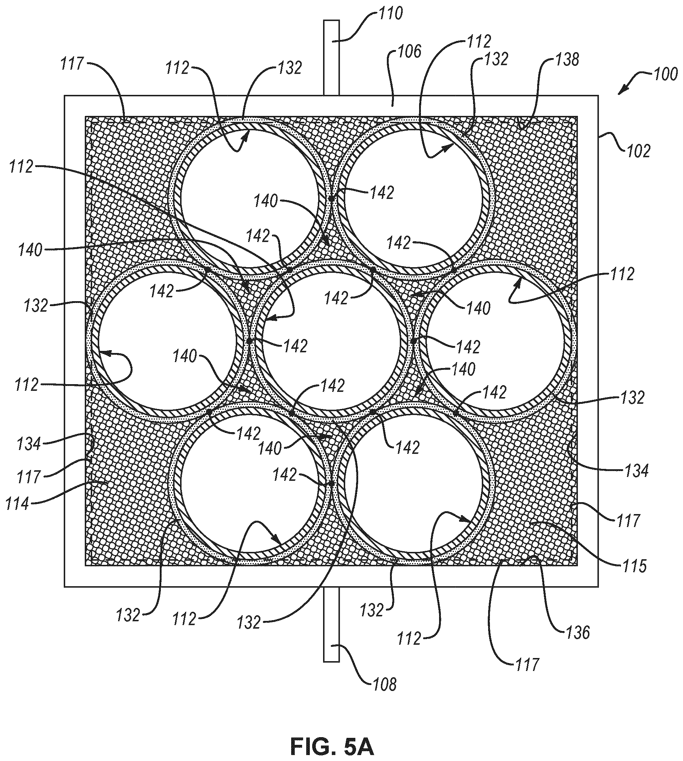

As shown in Figure 5A, the entirety of the mold 102 is filled with macro-sized low-density spheres 112 and micro-sized low-density spheres 114. Each one of the macro-sized low-density spheres 112 has been pre-coated with the coating layer 132 such that the macro-sized low-density spheres 112 are spaced apart from each other and the interior walls of the mold 102, including the lateral surfaces 134, the base surface 136, and a top surface 138 of the mold 102. As shown, the coating layer 132 prevents the macro-sized low-density spheres 112 from entering the macro-restricted regions 117 of the mold 102 and therefore the macro-sized low-density spheres 112 can be added to the mold 102 without additional edge placement requirements. In some cases, the macro-sized low-density spheres 112 may be placed randomly (i.e., no deliberate placements) within the mold 102, with the coating layer 132 fulfilling all the spacing requirements for the mold 102. This includes maintaining proper distance between adjacent spheres and preventing the spheres from entering the macro-restricted regions 117. The number of macro-sized low-density spheres 112 that can fit into the mold 102 can be maximized so that the coating layers 132 of each adjacent sphere contact each other at a contact point 142. Accordingly, in some examples, the coating layer 132 of one macro-sized low-density sphere 112 may contact the coating layer 132 of another one of the macro-sized low-density spheres 112 at the contact point 142. The macro-sized low-density spheres 112 are surrounded by micro-sized low-density spheres 114, with the micro-sized low-density spheres 114 filling the remaining space in the mold, including interstitial spaces 140 between the macro-sized low-density spheres 112.

In some examples, the macro-sized low-density spheres 112 are positioned in predetermined locations within the macro-permitted regions 115 of the mold 102 using a positioning tool. Placing the macro-sized low-density spheres 112 within the predetermined locations with a positioning tool ensures adequate spacing between the spheres and adjacent spheres, edges of the part, and other macro-restricted regions 117. Various positioning tools may be employed, including in some examples, robotic pick-and-place systems that accurately position each macro-sized low-density sphere 112. In some other examples, a sphere template with holes slightly larger than the spheres can be used to hold the spheres in position during loading of the micro-sized low-density spheres 114. In yet some other example, standoff meshes can also be utilized to prevent direct contact between spheres. Whether using the coating layer 132 or placing the macro-sized low-density spheres 112 in predetermined locations using a positioning tool, the spacing between adjacent macro-sized low-density spheres 112 can be uniformly maintained within the mold 102. Alternatively, the macro-sized low-density spheres 112 can be non-uniformly positioned within the mold 102 to achieve specific design requirements or to optimize the structural properties of the final part.

A total volume of the mold 102 occupied by the macro-sized low-density spheres 112 and the micro-sized low-density spheres 114 can vary. In some examples, the macro-sized low-density spheres 112 constitutes a significant portion of the total volume, contributing to structural efficiency and reducing the overall density of the syntactic-foam part. For example, the volume percentage of the macro-sized low-density spheres 112 within the mold 102 may be between and inclusive of 10% and 70% and between, and inclusive of 25% and 60% in some other examples, and between, and inclusive of 40% and 55% in yet some other examples. The remaining volume, aside from the spaces between spheres that will be filled with resin, is filled with the micro-sized low-density spheres 114, which occupy all empty spaces including the interstitial spaces 140 between the macro-sized low-density spheres 112. Consequently, the micro-sized low-density spheres 114 fill all gaps and voids surrounding the macro-sized low-density spheres 112. In some cases, the packing density of the macro-sized low-density spheres 112 and the micro-sized low-density spheres 114 within the mold 102 may be between and inclusive of 50% to 99% in some examples, and between and inclusive of 67% to 95% in some other examples, and between and inclusive of 80% to 85% in some other examples.

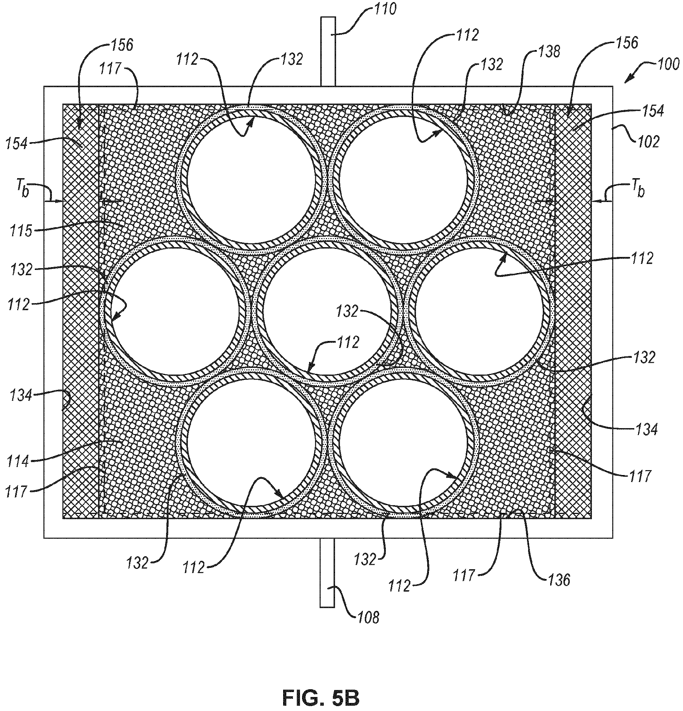

As shown in Figure 5B, according to some examples, prior to loading the macro-sized low-density spheres 112 and the micro-sized low-density spheres 114 within the mold 102, the method 200 may include coating at least one interior wall of the mold 102 with a boundary layer 156. The boundary layer 156 has a boundary thickness *T_{b}* that defines at least some of the macro-restricted regions 117 of the mold 102. Accordingly, the boundary layer 156 prevents the macro-sized low-density spheres 112 from extending within the boundary layer 156 and thus prevents the macro-sized low-density spheres 112 from extending within any macro-restricted regions 117 occupied by the boundary layer 156. The boundary layer 156 may coat all or at least one of the interior walls of the mold 102, including lateral surfaces 134, the base surface 136, and the top surface 138 of the mold 102. In some examples, the boundary layer 156, together with the coating layer 132 of any macro-sized low-density spheres 112 that contact the boundary layer 156, may define the macro-restricted region 117. In other words, in some examples such as shown in Figure 4, the thickness *T_{b}* of the boundary layer 156 combined with the thickness *T_{c}* of the coating layer 132 define the macro-restricted region 117. In certain cases, the boundary layer 156 may offer extra material for machining during subsequent processing, protecting the macro-sized low-density spheres 112 from potential damage during subsequent processing.

The boundary layer 156 can be made of any of various boundary materials 154, such as, but not limited to, a pure resin material (e.g., epoxy resin), a resin matrix composite material (i.e., reinforcement materials embedded in a matrix material), polymer (e.g., polyurethane, a silicone, or the like), a high-modulus polymer (e.g., highly cross-linked stiff-chain polymer, nano-particle loaded polymer, colloidal silica nanoparticle loaded polymer), ceramic, and the like. The reinforcement materials of the resin matrix composite material can be any of various materials, such as a fiber or particle reinforced composite material. In some examples, the boundary layer 156 is a made of a syntactic foam, including micro-sized low-density spheres, such as the micro-sized low-density spheres 114 and a resin, which may be the same resin or a different resin used to embed the spheres in the mold 102.

Referring generally to Figure 9, and specifically to Figure 6, after loading the macro-sized low-density spheres 112 at block 204, the method 200 also includes (block 206) introducing resin 144 into the mold 102 so that the resin 144 fills the mold 102. Referring to Figure 6, in some examples, the resin 144 is introduced into the mold 102 through the resin inlet 108 at the bottom or the mold 102 and flows through the mold 102 in a bottom-to-top or generally bottom-to-top direction (i.e., a direction parallel or generally parallel to the directional arrows) from the bottom of the mold 102 to the top of the mold 102. In some examples, the resin 144 is pumped (i.e., actively pushed) through the resin inlet 108 and into the mold 102 via a pump (not shown). In some examples, the resin 144 can also be actively pulled via a negative pressure introduced at the top of the mold 102, such as via a negative pressure device (e.g., a vacuum device). After the mold 102 is filled with the resin 144, such that the macro-sized low-density spheres 112 and the micro-sized low-density spheres 114 are embedded within the resin 144, any excess portion of the resin 144 is removed from the mold 102, such as via the resin outlet 110. Although not shown, in some alternative examples, the resin 144 can be introduced into the mold 102 from a top of the mold 102 and allowed to flow downward in a top-to-bottom or generally top-to-bottom direction to fill the mold 102. In yet some other examples, the resin 144 can be introduced into the mold 102 from a side of the mold 102 and allowed to flow upward and downward to fill the mold 102.

The resin 144 can be any of various types of resin conducive to embedding and immobilizing the macro-sized low-density spheres 112 and micro-sized low-density spheres 114. According to some examples, the resin 144 is one or more of a pure resin material (e.g., epoxy resin), resin matrix composite material (i.e., reinforcement materials embedded in a matrix material), a high-modulus polymer (e.g., highly cross-linked stiff-chain polymer, nano-particle loaded polymer, colloidal silica nanoparticle loaded polymer), and the like. The reinforcement materials of the resin matrix composite material can be any of various materials, such as fused silica, nano-particles, milled carbon fibers, and/or the like. According to some examples, the resin 144 includes density-reducing components, such as smaller low-density spheres (e.g., hollow spheres such as hollow glass, ceramic, or polymer spheres), which helps to reduce the density of the resin 144 without compromising the strength of the resin 144.

The introduction of the resin 144 into the mold 102 is performed in such a way that the macro-sized low-density spheres 112 remain in the macro-permitted regions 115 such that they do not migrate into the macro-restricted regions 117. That is, any shifting within the mold 102 of macro-sized low-density spheres 112 or micro-sized low-density spheres 114 during the resin infusion process will not result in any macro-sized low-density spheres 112 entering a macro-restricted region 117. This stability is achieved due to the tight packing of the spheres within the mold 102, the preventive function of the coating layer 132, if coated, and in some examples, the strategic placement of the macro-sized low-density spheres 112 at sufficient distances from the macro-restricted regions 117.

Referring generally to Figure 9, introducing the resin 144 into the mold 102 at block 206, the method 200 also includes (block 208) solidifying the resin 144. According to some examples, solidifying the resin 144 includes partially or fully curing the resin 144. Fully curing the resin 144 can include raising the temperature of the resin 144 to a cure temperature of the resin 144. To promote void-free curing of the resin 144, the interior cavity 104 of the mold 102 can be pressurized. In some alternative examples, the resin 144 is partially or fully cured via alternative methods, such as ultraviolet or other radiation processing of the resin 144. The curing of the resin 144 can be irreversible (e.g., the resin 144 can be a thermoset material) or reversible (e.g., the resin 144 can be a thermoplastic material).

In some examples, the boundary material 154 and/or the coating material is different from the resin 144. For example, the boundary material 154 and/or the coating material is a different type of resin than the resin 144, or is configured differently than the resin 144. For example, the boundary material 154 and/or the coating material can be stronger, denser, stiffer, and/or more durable than the resin 144. Because the percentage of the syntactic-foam part 148 made of the boundary material 154 and/or coating material is significantly lower than that of the resin 144 (e.g., the coating material forming only a coating on the macro-sized low-density spheres 112), the boundary material 154 and/or the coating material can be denser than the resin 144 without significantly negatively affecting the overall density of the part, while helping to improve the overall strength of the part. Accordingly, the coating material, which can be stronger, stiffer, denser, and/or more durable than the macro-sized low-density spheres 112, protects the integrity of the macro-sized low-density spheres 112 when the resin 144 is infused and/or cured at a higher temperature, such as a temperature that would otherwise soften or damage the macro-sized low-density spheres 112.

According to some examples, after the resin 144 is solidified at block 208, the macro-sized low-density spheres 112, the micro-sized low-density spheres 114, and the resin 144 form a syntactic-foam part 148 (see, e.g., Figure 7). As shown in Figure 7, the method 200 can further include removing the syntactic-foam part 148 from the mold 102. The syntactic-foam part 148, after being removed from the mold 102, can form a stand-alone part or be combined with one or more other parts or components (e.g., other syntactic-foam parts or blocks) to form a larger or more complex part. According to some examples, the syntactic-foam part 142 has an overall density between, and inclusive of, 0.05 g/cm³ and 0.75 g/cm³, between, and inclusive of, 0.1 g/cm³ and 0.5 g/cm³ in some examples, and between, and inclusive of, 0.15 g/cm³ and 0.4 g/cm³, in some other examples.

The syntactic-foam part 148 includes macro-permitted regions 115 and macro-restricted regions 117 adjacent to the macro-permitted regions 115. The macro-permitted regions 115 ensure that the macro-sized low-density spheres are in locations that are not subject to subsequent processing or to avoid stress concentrations. As shown, the macro-restricted regions 117 surround an exterior of the syntactic-foam part 148, such that an edge portion of each sidewall 135 (e.g., a base surface 137 and a top surface 139) has a macro-restricted region 117. Accordingly, each one of the macro-sized low-density spheres 112 are entirely within the macro-permitted region 115 of the syntactic-foam part 148. Although the coating layer 132 is shown surrounding each one of the macro-sized low-density spheres 112, the coating layer 132 is considered separate from the underlying sphere and thus can extend within the macro-restricted region 117. In fact, the coating layer 132 can be used to prevent the macro-sized low-density sphere 112 from extending into the macro-restricted region 117 itself, when the coating layer 132 is at least as thick as the width of the macro-restricted region 117. In some examples, the interior of the syntactic-foam part 148 may also include macro-restricted regions 117 (not shown). These macro-restricted regions 117 may be used to space out spheres to minimize local stress concentrations at points where macro-sized low-density spheres 112 are in close contact.

The parent foam 146, comprised of the micro-sized low-density spheres 114 and the resin 144 surrounds the macro-sized low-density spheres 112. In some examples, the entirety of the macro-restricted regions 117 may be filled with the parent foam 146. In some other examples, the macro-restricted regions 117 may be partially filled with the parent foam 146 and other materials, such as the coating layer 132, as shown in Figure 7. In yet some other examples, the entirely of the macro-restricted regions 117 may be devoid of micro-sized low-density spheres. The macro-permitted region 115 includes the entirety of the macro-sized low-density spheres, a portion of the parent foam 146, and may include coating layers 132, if the macro-sized low-density spheres are coated.

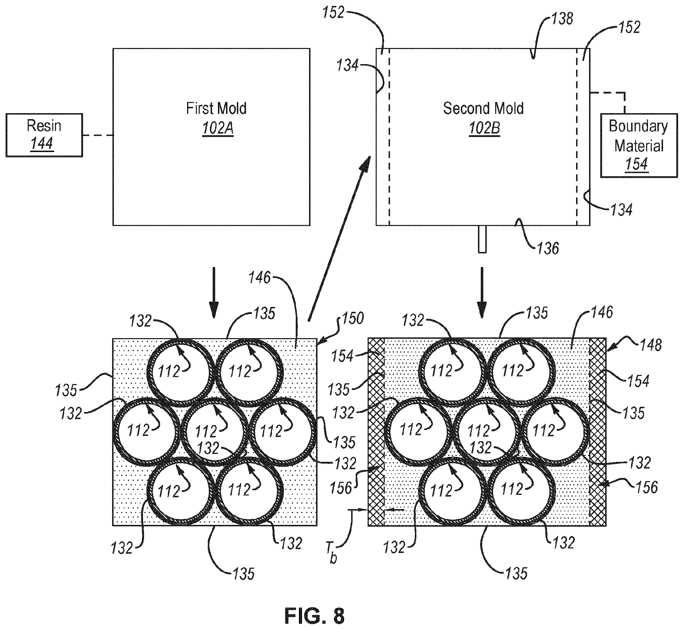

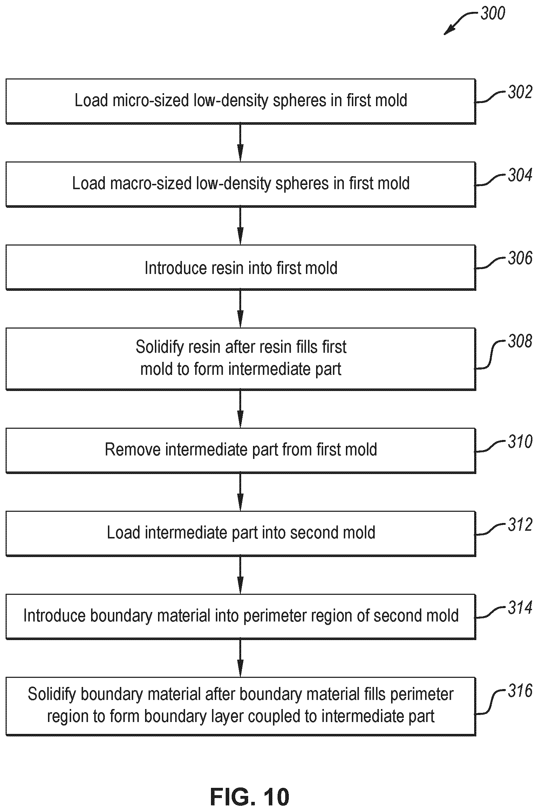

Referring generally to Figure 10, and specifically to Figure 8, according to some examples, a method 300 of making a syntactic-foam part 148 (see, e.g., Figure 7) includes step similar to those of blocks 202-208 of the method 200. More specifically, the method 300 includes (block 302) loading micro-sized low-density spheres 114 into a first mold 102A, (block 304) loading macro-sized low-density spheres 112 into the first mold 102A (see, e.g., Figure 1), (block 306) introducing a resin 144 into the first mold 102A (see, e.g., Figure 6), and (block 308) solidifying the resin 144 after the resin 144 fills the first mold 102A to form an intermediate part 150. However, the method 300 includes additional steps of (block 310) removing the intermediate part 150 from the first mold 102A, and (block 312) loading the intermediate part 150 into a second mold 102B. In some examples, more than one intermediate part 150 may be loaded into the second mold 102B. For example, multiple intermediate parts can be arranged within the second mold 102B, such as being stacked or laterally aligned within the second mold 102B. Additionally, one or more of the multiple intermediate parts may be differently sized from others of the multiple intermediate parts, such that some intermediate parts may be formed within different first molds before being loaded within the second mold 102B. The intermediate part 150 includes macro-sized low-density spheres 112 and micro-sized low-density spheres 114 embedded together by the resin 144. In some examples, after removing the intermediate part 150 from the first mold 102A and before loading the intermediate part 150 into the second mold 102B, the method 300 may include a secondary solidification step that further solidifies the resin 144. In some examples, the resin 144 is only partially cured at block 308 while in the first mold 102A and then fully cured after the intermediate part 150 is removed from the first mold 102A at block 310.

The second mold 102B has a larger volume than the first mold 102A. Consequently, when the intermediate part 150 is placed within the second mold 102B, the intermediate part 150 does not fill the entire volume of the second mold 102B. Therefore, the intermediate part 150 can be placed within the second mold 102B such that at least one sidewall 135 of the intermediate part 150 is spaced apart from at least one interior wall of the second mold 102B. In some examples, the intermediate part 150 is spaced apart from at least one of the lateral surface 134 of the second mold 102B. Additionally, the intermediate part 150 may be positioned away from the top of the second mold 102B, such that when the second mold 102B is closed, the intermediate part 150 does not come in contact with the top surface 138 of the second mold 102B. In some examples, the intermediate part 150 may be spaced apart from the base of the second mold 102B using spacing devices to support the intermediate part 150 away from the base surface 136 of the mold 102, where the spacing devices maintain a position of the intermediate part 150 while still allowing a resin material to flow around the intermediate part 150. Accordingly, the extra spacing around the intermediate part 150 within the second mold 102B defines a perimeter region 152 between the at least one interior wall of the second mold 102B and the sidewalls 135 of the intermediate part 150. The perimeter region 152 defines at least of portion of the macro-restricted regions 117 of the second mold 102B. In other words, the macro-restricted regions 117 of the second mold 102B may be defined by the perimeter regions 152 and other regions within the second mold 102B.

The method 300 further includes (block 314) introducing a boundary material 154 into perimeter region 152 of the second mold 102B so that the boundary material 154 fills the perimeter region 152. The boundary material 154 may include any of various materials that can flow within the perimeter region 152 including but not limited to, a resin matrix composite material (i.e., reinforcement materials embedded in a matrix material), a high-modulus polymer (e.g., highly cross-linked stiff-chain polymer, nano-particle loaded polymer, colloidal silica nanoparticle loaded polymer), and the like. Additionally, after the intermediate part 150 is loaded into the second mold 102B and before the boundary material 154 is introduced into the second mold 102B, micro-sized low-density spheres, such as the micro-sized low-density spheres 114, can be loaded into the perimeter region 152 around the intermediate part 150. In some examples, micro-sized low-density spheres, other than the micro-sized low-density spheres 114, may be within the boundary material 154, such spheres may be, for example, stronger or more durable than the micro-sized low-density spheres 114.

The method 300 also includes (block 316) solidifying the boundary material after the boundary material fills the perimeter region 152 to form the boundary layer 156 coupled to at least one sidewall of the intermediate part 150. The boundary layer 156 has a boundary thickness *T_{b}* that defines at least some of the macro-restricted regions 117 of the mold 102. Accordingly, the boundary layer 156 prevents the macro-sized low-density spheres 112 from extending within the boundary layer 156 and thus prevents the macro-sized low-density spheres 112 from extending within any macro-restricted regions 117 occupied by the boundary layer 156. After removal of the syntactic-foam part 148 from the second mold 102B, the syntactic-foam part 148 may be subject to subsequent processing, including machining, the boundary layer 156 may offer extra material, protecting the macro-sized low-density spheres 112 from potential damage during subsequent processing. Accordingly, in some examples, a boundary layer 156 may be coupled to the intermediate part 150 as described in the method 300 using a two-mold process, or a boundary layer 156 may be coated within a mold prior to adding the spheres, allowing the syntactic-foam part 148 to be made in a single mold.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

The term "about" or "substantially" in some examples, is defined to mean within +/-5% of a given value, however in additional examples any disclosure of "about" may be further narrowed and claimed to mean within +/- 4% of a given value, within +/- 3% of a given value, within +/- 2% of a given value, within +/- 1% of a given value, or the exact given value. Further, when at least two values of a variable are disclosed, such disclosure is specifically intended to include the range between the two values regardless of whether they are disclosed with respect to separate examples, and specifically intended to include the range of at least the smaller of the two values and/or no more than the larger of the two values. Additionally, when at least three values of a variable are disclosed, such disclosure is specifically intended to include the range between any two of the values regardless of whether they are disclosed with respect to separate examples, and specifically intended to include the range of at least the A value and/or no more than the B value, where A may be any of the disclosed values other than the largest disclosed value, and B may be any of the disclosed values other than the smallest disclosed value.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

The present subject matter may be embodied in other specific forms without departing from its essential characteristics. The described examples are to be considered in all respects only as illustrative and not restrictive. All changes which come within the meaning and range of the claims are to be embraced within their scope.

The following present further examples:
Example 1. A method of making a syntactic-foam part, the method comprising:
   loading micro-sized low-density spheres into a mold, wherein the mold comprises macro-permitted regions and macro-restricted regions;
   loading macro-sized low-density spheres into the mold such that the macro-sized low-density spheres are surrounded by the micro-sized low-density spheres, each one of the macro-sized low-density spheres is spaced apart from any other one of the macro-sized low-density spheres, some of the micro-sized low-density spheres are between adjacent ones of the macro-sized low-density spheres, and each one of the macro-sized low-density spheres is entirely within one of the macro-permitted regions of the mold, wherein a diameter of the macro-sized low-density spheres is at least ten times larger than a diameter of the micro-sized low-density spheres;
   introducing a resin into the mold to fill the mold and embed the micro-sized low-density spheres and the macro-sized low-density spheres within the resin; and
   solidifying the resin after the resin fills the mold.
Example 2. The method according to Example 1, wherein:
   when the resin embeds the micro-sized low-density spheres, a parent foam is formed that surrounds the macro-sized low-density spheres; and
   an entirety of the macro-restricted regions are filled with the parent foam.
Example 3. The method according to Example 1 or Example 2, further comprising, prior to loading the macro-sized low-density spheres into the mold, coating each one of the macro-sized low-density spheres with a coating material to form a coating layer surrounding an entirety of each one of the macro-sized low-density spheres, wherein:
   the coating layer has a coating thickness; and
   the coating layer at least partially prevents each one of the macro-sized low-density spheres from entering the macro-restricted regions of the mold.
Example 4. The method according to Example 3, wherein:
   each one of the macro-sized low-density spheres is spaced apart from any other one of the macro-sized low-density spheres by at least a minimum distance; and
   the minimum distance is twice the coating thickness of the coating layer.
Example 5. The method according to Example 3 or Example 4, wherein the coating material of the coating layer is a syntactic foam comprising micro-sized low-density spheres and a coating resin.
Example 6. The method according to any preceding Example, further comprising, prior to loading the macro-sized low-density spheres into the mold, adding a plurality of spacing devices to each one of the macro-sized low-density spheres at various locations about a circumference a corresponding one of macro-sized low-density spheres, wherein:
   each one of the plurality of spacing devices has a spacing length; and
   the plurality of spacing devices at least partially prevents each one of the macro-sized low-density spheres from entering the macro-restricted regions of the mold.
Example 7. The method according to any preceding Example, further comprising, prior to loading the macro-sized low-density spheres and the micro-sized low-density spheres in the mold, coating at least one interior wall of the mold with a boundary layer made of a boundary material, wherein:
   the boundary layer has a boundary thickness that defines at least some of the macro-restricted regions of the mold; and
   the boundary layer at least partially prevents each one of the macro-sized low-density spheres from entering at least some of the macro-restricted regions of the mold.
Example 8. The method according to any preceding Example, wherein the macro-sized low-density spheres are positioned in predetermined locations within the macro-permitted regions of the mold using a positioning tool.
Example 9. The method according to any preceding Example, wherein:
   the macro-sized low-density spheres further comprise first macro-sized low-density spheres, having a first diameter, and second macro-sized low-density spheres, having a second diameter; and
   the second diameter of the second macro-sized low-density spheres is at least two times larger than the first diameter of the first macro-sized low-density spheres.
Example 10. The method according to any preceding Example, wherein the macro-sized low-density spheres are uniformly positioned within the mold such that spacing between adjacent ones of the macro-sized low-density spheres is the same.
Example 11. The method according to any preceding Example, wherein:
   the macro-sized low-density spheres have a first density;
   after solidifying the resin, a parent foam is formed by the resin embedding the micro-sized low-density spheres, the parent foam has a second density; and
   the first density is lower than the second density.
Example 12. A syntactic-foam part, comprising:
   macro-permitted regions;
   macro-restricted regions adjacent to the macro-permitted regions;
   macro-sized low-density spheres arranged within micro-sized low-density spheres such that the macro-sized low-density spheres are surrounded by the micro-sized low-density spheres, each one of the macro-sized low-density spheres is spaced apart from any other one of the macro-sized low-density spheres, some of the micro-sized low-density spheres are between adjacent ones of the macro-sized low-density spheres, and each one of the macro-sized low-density spheres is entirely within one of the macro-permitted regions; wherein a diameter of the macro-sized low-density spheres is at least ten times larger than a diameter of the micro-sized low-density spheres; and
   a resin embedding the macro-sized low-density spheres and the micro-sized low-density spheres.
Example 13. The syntactic-foam part according to Example 12, wherein:
   a parent foam is formed by the resin embedding the micro-sized low-density spheres; and
   an entirety of the macro-restricted regions are filled with the parent foam.
Example 14. The syntactic-foam part according to Example 12 or Example 13, wherein:
   each one of the macro-sized low-density spheres is coated with a coating material to form a coating layer surrounding an entirety of each one of the macro-sized low-density spheres;
   the coating layer has a coating thickness;
   the coating layer at least partially prevents each one of the macro-sized low-density spheres from entering the macro-restricted regions; and
   each one of the macro-sized low-density spheres is spaced apart from any other one of the macro-sized low-density spheres by a minimum distance of at least twice the coating thickness of the coating layer.
Example 15. The syntactic-foam part according to any of Examples 12 - 14, wherein:
   the resin embedding the macro-sized low-density spheres and the micro-sized low-density spheres defines an intermediate part having sidewalls;
   a boundary layer is coupled to sidewalls of the intermediate part;
   the boundary layer is made of a boundary material;
   the boundary layer has a boundary thickness that defines at least some of the macro-restricted regions; and
   the boundary layer at least partially prevents each one of the macro-sized low-density spheres from entering the macro-restricted regions.
Example 16. The syntactic-foam part according to any of Examples 12 - 15, wherein the diameter of the micro-sized low-density spheres is less than one hundred microns.
Example 17. The syntactic-foam part according to any of Examples 12 - 16, wherein the diameter of the macro-sized low-density spheres is equal to or greater than 0.5 inches (1.3 cm).
Example 18. A method of making a syntactic-foam part, the method comprising:
   loading micro-sized low-density spheres into a first mold;
   loading macro-sized low-density spheres in the first mold such that the macro-sized low-density spheres are surrounded by the micro-sized low-density spheres, each one of the macro-sized low-density spheres is spaced apart from any other one of the macro-sized low-density spheres, some of the micro-sized low-density spheres are between adjacent ones of the macro-sized low-density spheres, and each one of the macro-sized low-density spheres are entirely within macro-permitted regions of the first mold, wherein a diameter of the macro-sized low-density spheres is at least ten times larger than a diameter of the micro-sized low-density spheres;
   introducing a resin into the first mold to fill the first mold and embed the micro-sized low-density spheres and the macro-sized low-density spheres within the resin;
   solidifying the resin after the resin fills the first mold to form an intermediate part;
   removing the intermediate part from the first mold;
   loading the intermediate part into a second mold having a larger volume than the first mold, such that the intermediate part is spaced apart from at least one interior wall of the second mold and a perimeter region is defined between the at least one interior wall of the second mold and the intermediate part, wherein the perimeter region defines at least a portion of macro-restricted regions of the second mold;
   introducing a boundary material into the perimeter region of the second mold so that the boundary material fills the perimeter region; and
   solidifying the boundary material after the boundary material fills the perimeter region to form a boundary layer coupled to sidewalls of the intermediate part.
Example 19. The method according to Example 18, wherein the boundary material is at least partially formed of a parent foam comprising micro-sized low-density spheres and a resin.
Example 20. The method according to Example 18 or Example 19, further comprising:
   prior to loading the macro-sized low-density spheres into the first mold, coating each one of the macro-sized low-density spheres with a coating material to form a coating layer surrounding an entirety of each one of the macro-sized low-density spheres;
   wherein:
      the coating layer has a coating thickness;
      each one of the macro-sized low-density spheres is spaced apart from any other one of the macro-sized low-density spheres by at least a minimum distance; and
      the minimum distance is twice the coating thickness of the coating layer.

## Claims

1. A method (200) of making a syntactic-foam part (148), the method comprising:
loading (202) micro-sized low-density spheres (114) into a mold (102), wherein the mold comprises macro-permitted regions (115) and macro-restricted regions (117) for macro-sized low-density spheres (112);
loading (204) macro-sized low-density spheres (112) into the mold such that the macro-sized low-density spheres are surrounded by the micro-sized low-density spheres, each one of the macro-sized low-density spheres is spaced apart from any other one of the macro-sized low-density spheres, some of the micro-sized low-density spheres are between adjacent ones of the macro-sized low-density spheres, and each one of the macro-sized low-density spheres is entirely within one of the macro-permitted regions of the mold, wherein a diameter of the macro-sized low-density spheres is at least ten times larger than a diameter of the micro-sized low-density spheres;
introducing (206) a resin (144) into the mold to fill the mold and embed the micro-sized low-density spheres and the macro-sized low-density spheres within the resin; and
solidifying (208) the resin after the resin fills the mold.

2. The method according to claim 1, wherein after solidifying the resin, a parent foam (146) is formed by the resin embedding the micro-sized low-density spheres, and wherein the parent foam surrounds the macro-sized low-density spheres; and wherein one or more of:
an entirety of the macro-restricted regions are filled with the parent foam; and
the macro-sized low-density spheres have a first density, the parent foam has a second density, and the first density is lower than the second density.

3. The method according to claim 1 or claim 2, further comprising, prior to loading the macro-sized low-density spheres into the mold, coating each one of the macro-sized low-density spheres with a coating material to form a coating layer (132) surrounding an entirety of each one of the macro-sized low-density spheres, wherein:
the coating layer has a coating thickness (*T_{c}*); and
the coating layer at least partially prevents each one of the macro-sized low-density spheres from entering the macro-restricted regions of the mold.

4. The method according to claim 3, wherein one or more of:
each one of the macro-sized low-density spheres is spaced apart from any other one of the macro-sized low-density spheres by at least a minimum distance, and the minimum distance is twice the coating thickness of the coating layer; and
the coating material of the coating layer is a syntactic foam comprising micro-sized low-density spheres and a coating resin.

5. The method according to any preceding claim, further comprising, prior to loading the macro-sized low-density spheres into the mold, adding a plurality of spacing devices (113) to each one of the macro-sized low-density spheres at various locations about the circumference of the corresponding one of macro-sized low-density spheres, wherein:
each one of the plurality of spacing devices has a spacing length; and
the plurality of spacing devices at least partially prevents each one of the macro-sized low-density spheres from entering the macro-restricted regions of the mold.

6. The method according to any preceding claim, further comprising, prior to loading the macro-sized low-density spheres and the micro-sized low-density spheres in the mold, coating at least one interior wall of the mold with a boundary layer (156) made of a boundary material, wherein:
the boundary layer has a boundary thickness (*T_{b}*) that defines at least some of the macro-restricted regions of the mold; and
the boundary layer at least partially prevents each one of the macro-sized low-density spheres from entering at least some of the macro-restricted regions of the mold.

7. The method according to any preceding claim, wherein one or more of:
the macro-sized low-density spheres are positioned in predetermined locations within the macro-permitted regions of the mold using a positioning tool; and
the macro-sized low-density spheres are uniformly positioned within the mold such that spacing between adjacent ones of the macro-sized low-density spheres is the same.

8. The method according to any preceding claim, wherein:
the macro-sized low-density spheres further comprise first macro-sized low-density spheres, having a first diameter, and second macro-sized low-density spheres, having a second diameter; and
the second diameter of the second macro-sized low-density spheres is at least two times larger than the first diameter of the first macro-sized low-density spheres.

9. The method according to any preceding claim, wherein one or more of:
the diameter of each of the macro-sized low-density spheres is equal to or greater than 0.5 inches (1.3 cm);
the diameter of each of the micro-sized low-density spheres is less than one hundred microns; and
the density of each of the micro-sized low-density spheres and/or macro-sized low-density spheres is between, and inclusive of, 0.005 g/cm³ and 0.6 g/cm³.

10. The method of any preceding claim, wherein the mold is a first mold (102A), and wherein solidifying the resin after the resin fills the first mold forms an intermediate part (150), and the method further comprises;
removing the intermediate part from the first mold;
loading the intermediate part into a second mold (102B) having a larger volume than the first mold, such that the intermediate part is spaced apart from at least one interior wall of the second mold and a perimeter region is defined between the at least one interior wall of the second mold and the intermediate part, wherein the perimeter region defines at least a portion of macro-restricted regions of the second mold;
introducing a boundary material into the perimeter region of the second mold so that the boundary material fills the perimeter region; and
solidifying the boundary material after the boundary material fills the perimeter region to form a boundary layer (156) coupled to sidewalls of the intermediate part; and optionally,
the boundary material is at least partially formed of a parent foam comprising micro-sized low-density spheres and a resin; and
prior to loading the macro-sized low-density spheres into the first mold, the method comprises coating each one of the macro-sized low-density spheres with a coating material to form a coating layer surrounding an entirety of each one of the macro-sized low-density spheres.

11. A syntactic-foam part (148), comprising:
macro-permitted regions (115) for macro-sized low-density spheres;
macro-restricted regions (117) adjacent to the macro-permitted regions;
macro-sized low-density spheres (112) arranged within micro-sized low-density spheres (114) such that the macro-sized low-density spheres are surrounded by the micro-sized low-density spheres, each one of the macro-sized low-density spheres is spaced apart from any other one of the macro-sized low-density spheres, some of the micro-sized low-density spheres are between adjacent ones of the macro-sized low-density spheres, and each one of the macro-sized low-density spheres is entirely within one of the macro-permitted regions; wherein a diameter of the macro-sized low-density spheres is at least ten times larger than a diameter of the micro-sized low-density spheres; and
a resin (144) embedding the macro-sized low-density spheres and the micro-sized low-density spheres.

12. The syntactic-foam part according to claim 11, wherein:
a parent foam (146) is formed by the resin embedding the micro-sized low-density spheres; and
an entirety of the macro-restricted regions are filled with the parent foam.

13. The syntactic-foam part according to claim 11 or claim 12, wherein:
each one of the macro-sized low-density spheres is coated with a coating material to form a coating layer (132) surrounding an entirety of each one of the macro-sized low-density spheres;
the coating layer has a coating thickness;
the coating layer at least partially prevents each one of the macro-sized low-density spheres from entering the macro-restricted regions; and
each one of the macro-sized low-density spheres is spaced apart from any other one of the macro-sized low-density spheres by a minimum distance of at least twice the coating thickness of the coating layer.

14. The syntactic-foam part according to any of claims 11 - 13, wherein:
the resin embedding the macro-sized low-density spheres and the micro-sized low-density spheres defines an intermediate part (150) having sidewalls;
the syntactic-foam part further comprises a boundary layer (156) that is coupled to the sidewalls of the intermediate part;
the boundary layer is made of a boundary material;
the boundary layer has a boundary thickness that defines at least some of the macro-restricted regions; and
the boundary layer at least partially prevents each one of the macro-sized low-density spheres from entering the macro-restricted regions.

15. The syntactic-foam part according to any of claims 11 - 14, wherein one or more of:
the diameter of each of the micro-sized low-density spheres is less than one hundred microns;
the diameter of each of the macro-sized low-density spheres is equal to or greater than 0.5 inches (1.3 cm); and
the density of each of the micro-sized low-density spheres and/or macro-sized low-density spheres is between, and inclusive of, 0.005 g/cm³ and 0.6 g/cm³.
